# EUROPEAN PATENT APPLICATION

(11) **EP 4 674 696 A1**
(43) Date of publication of application: **07.01.2026**
(21) Application number: 24186238.2
(22) Date of filing: 03.07.2024
(51) Int. Cl.: B60S 1/34, B60S 1/36, B60S 1/04

(54) **A WIPER SYSTEM FOR A VEHICLE WINDSHIELD**

(71) Applicant: VOLVO TRUCK CORPORATION, 405 08 Göteborg (SE)
(72) Inventor: THANGAMARIAPPAN, Balaganesh, Sattur-626203, Tamil Nadu (IN); VARGHESE, Sonu Geevarghese, Mavelikara - 690101, Kerala (IN)
(74) Representative: Germain Maureau

(57) **Abstract**

The invention relates to a wiper system (100) for a vehicle windshield (10), the wiper system (100) comprising:
- a support assembly (120) that is slidably movable along a guide rail (101),
- a wiper (110) rotatably mounted on the support assembly (120), the wiper (110) comprising a wiper arm (112) and a wiper blade (114) connected thereto,
wherein the support assembly (120) comprises :
• a first motor mounted on a motor base, the motor base being slidably movable relative to a tilting table between at least two different positions, i.e. a first position in which the first motor is arranged for interacting with a first coupling element to rotate the wiper arm around a rotation axis, and a second position in which the first motor is arranged for interacting with a second coupling element to adjust a length of the wiper,
• a second motor adapted to pivot the tilting table around a pivot axis, the tilting table being movable between at least two different positions, i.e. a non-operating position in which the wiper arm is substantially vertical, the pressure applied by the wiper blade (114) on the vehicle windshield (10) thus being null, and a tilted position in which the wiper blade (114) is inclined relative to the vertical, the wiper blade (114) thus applying a pressure on the vehicle windshield (10).

## Description

### TECHNICAL FIELD

The present disclosure relates to a wiper system for a vehicle windshield. The disclosure also relates to a vehicle comprising such a wiper system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional wiper systems for vehicles are often arranged as two pendulum wipers connected to the vehicle chassis at a position below the vehicle windshield. Hereby, the two pendulum wipers rotate at the lower portion of the windshield when wiping the windshield. The two pendulum wipers may be arranged to move in the same direction or in opposite direction to each other.

However, using two pendulum wipers may not wipe the windshield sufficiently as a relatively large area above the extension of the wipers will not be wiped. This is in particular evident for larger windshields. For such larger windshields, a solution is to use an additional pendulum wiper. Hence, three pendulum wipers are used. Such solution is however still faced with the problem of leaving an un-wiped area at the upper end of the windshield and in particular at the upper corner areas of the windshield.

Another issue with conventional wiper systems is their difficulty to achieve a good wipe of windscreens having a curved shape. In particular, the attack angle of the wiper blade should be as normal to the windscreen as possible and maintaining a substantially constant angle to the same throughout the complete wiping motion. With a highly curved windscreen and a conventional wiper system this is not achievable for some parts of the windscreen.

### SUMMARY

An object of the present disclosure is to provide a wiper system which alleviates at least some of the drawbacks of the conventional wiper systems.

According to a first aspect of the disclosure, the disclosure relates to a wiper system for a vehicle windshield, the wiper system comprising:
- a support assembly that is slidably movable along a guide rail,
- a wiper rotatably mounted on the support assembly, the wiper comprising a wiper arm and a wiper blade connected thereto,
wherein the support assembly comprises :
- a first motor mounted on a motor base, the motor base being slidably movable relative to a tilting table between at least two different positions, i.e. a first position in which the first motor is arranged for interacting with a first coupling element to rotate the wiper arm around a rotation axis, and a second position in which the first motor is arranged for interacting with a second coupling element to adjust a length of the wiper,
- a second motor adapted to pivot the tilting table around a pivot axis, the tilting table being movable between at least two different positions, i.e. a non-operating position in which the wiper arm is substantially vertical, the pressure applied by the wiper blade on the vehicle windshield thus being null, and a tilted position in which the wiper blade is inclined relative to the vertical, the wiper blade thus applying a pressure on the vehicle windshield.

The first aspect of the disclosure may seek to achieve a good wipe of windscreens having a curved shape. A technical benefit may include the possibility of pivoting the wiper arm in such a way that the pressure applied by the wiper blade on the windscreen can be adjusted, thus optimizing the wiping operation. Furthermore, the disclosure permits to adjust the length of the wiper arm in such a way that the wiper blade may cover the entire surface of the windscreen. Finally, the disclosure permits to avoid the use of two pendulum wipers due to the linear movement of an assembly supporting the wiper arm along a guide rail.

Optionally in some examples, including in at least one preferred example, the second motor is adapted to act on a belt connected to the motor base to produce a linear movement of the motor base relative to the tilting table when the belt is in an engaged state.

Optionally in some examples, including in at least one preferred example, the belt is movable through actuating rollers between a non-engaged state, in which the belt is not in contact with a motor spindle of the second motor, and the engaged state, in which the belt is in contact with said motor spindle.

Optionally in some examples, including in at least one preferred example, the guide rail includes a plurality of permanent magnets and the support assembly includes a plurality of perforations and at least one electromagnetic coil that surrounds the plurality of perforations, said at least one electromagnetic coil being adapted to interact with the permanent magnets to generate a magnetic induction-based electrodynamic force that leads to a linear motion of the support assembly along the guide rail.

Optionally in some examples, including in at least one preferred example, the wiper system further comprises a control unit arranged to control the first motor and/or the second motor to perform at least one operation chosen among a rotation of the wiper arm, an adjustment of the length of the wiper, and a pivoting of the tilting table.

Optionally in some examples, including in at least one preferred example, the wiper system further comprises a pressure sensor arranged to determine the pressure applied by the wiper blade on the vehicle windshield and send a corresponding pressure signal to the control unit

Optionally in some examples, including in at least one preferred example, the control unit is adapted to adjust the position of the wiper blade relative to the vehicle windshield by means of the first and/or second motors in response to the pressure signal received from the pressure sensor.

Optionally in some examples, including in at least one preferred example, the wiper system further comprises a moisture sensor adapted to sense the presence of moisture on the windshield and send a corresponding moisture signal to the control unit.

Optionally in some examples, including in at least one preferred example, the moisture sensor is adapted to sense a change in the amount of light refracted at an outer windshield surface due to the presence of moisture.

Optionally in some examples, including in at least one preferred example, the control unit is adapted to cause a movement of the wiper blade by means of the first and/or second motors in response to the moisture signal received from the moisture sensor.

Optionally in some examples, including in at least one preferred example, the first coupling element comprises a toothed gear provided in the wiper arm, said toothed gear being adapted to interact with a toothed outer profile of a motor spindle of the first motor in the first position of the motor base.

Optionally in some examples, including in at least one preferred example, the first coupling element comprises threads provided in the wiper arm, said threads being adapted to interact with a threaded outer profile of a motor spindle of the first motor in the first position of the motor base.

Optionally in some examples, including in at least one preferred example, the second coupling element comprises a toothed outer profile provided on a wiper arm extender connected to the wiper blade, said toothed outer profile being adapted to interact with a toothed outer profile of a motor spindle of the first motor in the second position of the motor base.

According to a second aspect of the disclosure, the disclosure relates to a vehicle comprising a vehicle windshield and a wiper system as above defined.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a view in elevation of a vehicle, the vehicle comprising a cab defining a driver compartment delimited by a windshield and a wiper system according to the invention.
**FIG. 2** schematically illustrates a perspective view of a windshield provided with a wiper system according to an embodiment of the invention, the wiper system being disposed under the windshield in a central position, the wiper being in a stowed position.
**FIGS. 3a** and **3b** schematically illustrate perspective and sides view of the wiper system illustrated in **FIG. 2****,** the wiper being in an upright position, the wiper blade being distant from the windshield.
**FIGS. 4a** and **4b** are views similar to **FIGS. 3a** and **3b****,** the wiper arm being in a tilted position, the wiper blade contacting the windshield.
**FIGS. 5** and **6** are enlarged perspective and front views of the support assembly of the wiper system illustrated in FIG. 2.
**FIG. 7** is an enlarged perspective view of the tilting table of the support assembly of **FIGS. 5** and **6****.**
**FIG. 8** is a perspective view of a wiper supported by the support assembly of **FIGS. 5** and **6****.**
**FIGS. 9** and **10** are enlarged perspective views of the support assembly of **FIGS. 5** and **6** supporting the wiper of **FIG. 8****,** respectively in first and second positions of a motor base of the support assembly.

### DETAILED DESCRIPTION

The detailed description set forth below provides information and examples of the disclosed technology with sufficient detail to enable those skilled in the art to practice the disclosure.

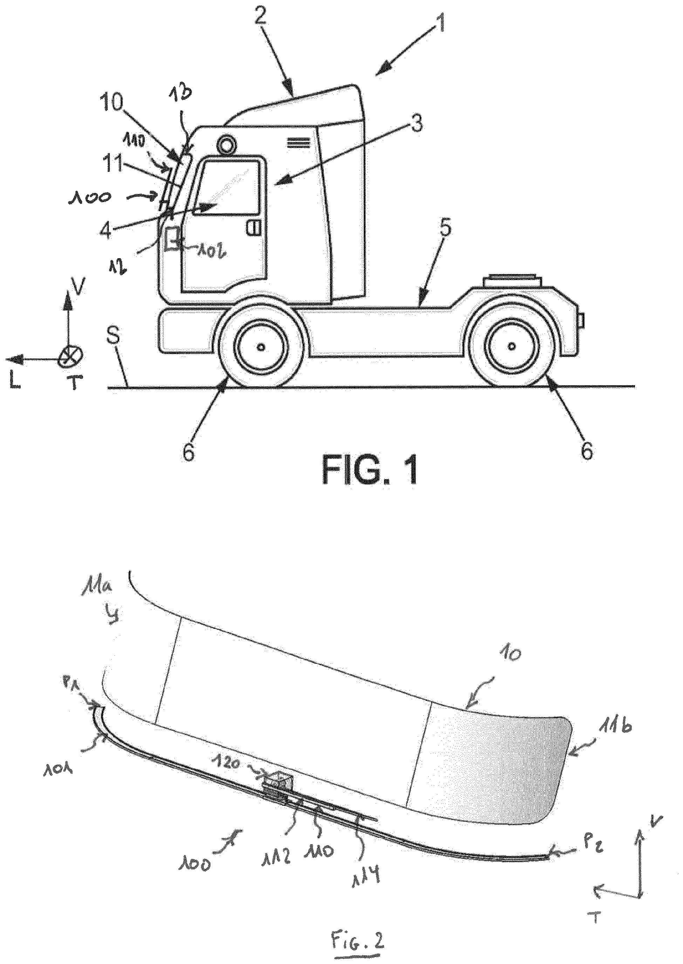

**FIG. 1** represents a vehicle 1 provided with a wiper system 100 according to the invention. In the represented embodiment, although not limited thereto, the vehicle 1 is a tractor of a truck comprising a frame 2 extending along a longitudinal direction L corresponding to a direction along which the vehicle 1 moves forward or rearward on a ground surface S. The frame 2 comprises a cab 3 defining a driver compartment 4 with a driving place where a driver may seat, and a chassis 5 adjoining the cab 3 in the longitudinal direction L. The cab 3 and the chassis 5 are mounted on wheels 6 driven by a motor system, not shown.

The cab 3 comprises a windshield 10 delimiting the driver compartment 4 in the longitudinal direction L. The windshield 10 extends in a transverse direction T, perpendicular to the longitudinal direction L, between opposite lateral edges 11 and in a vertical direction V, perpendicular to the longitudinal L and transversal T directions, between a lower edge 12 and an upper edge 13. The lateral edges 11 are parallel to each other and extend along the vertical direction V and the lower and upper edges 12, 13 are parallel to each other and extend in the transverse direction T between the lateral edges 11. In the illustrated embodiment, the windshield 10 is curved so that the lateral edges 11 are offset in the longitudinal direction L with respect to a remaining portion of the windshield 10.

The wiper system 100 includes a wiper 110 for cleaning the windshield 10. The wiper system 100 is adapted to move the wiper 110 across the windshield 10, with an oscillating back-and-forth movement. The movement of the wiper 110 across the windshield 10 cleans the windshield 10 by wiping dew and/or rainwater and/or dust and/or undesirable deposits off the windshield 10.

More generally, the wiper system 100 is arranged to move the wiper 110, relative to the windshield 10, with a rotation movement around a rotation axis perpendicular to the windshield 10 between an initial position, in which the wiper 110 is substantially parallel to the lower edge 12 of the windshield 10, and a final position, in which the wiper 110 is oriented at 180° relative to the initial position. The wiper system 100 is also arranged to move the wiper 110 with a translation movement between a first position, in which the wiper 110 is close to one of the lateral edges 11 of the windshield 10, and a second position, in which the wiper 110 is close to the opposite lateral edge 11 thereof. Thus, each cycle of the oscillating movement of the wiper 110 includes a first phase during which the wiper 110 is translated, and a second phase, during which the wiper 110 is rotated.

As detailed in the following paragraphs, the wiper system 100 of the invention is also adapted to modify the length of the wiper 110 in such a way that it can reach upper corner areas of the windshield 10. Furthermore, the wiper system 100 of the invention is also adapted to move the wiper 110 with a pivoting movement around a pivot axis parallel to the transverse direction T between a non-operating position, in which the wiper 110 is substantially vertical, and a tilted position, in which the wiper 110 is inclined relative to the vertical and is in contact with the windshield 10.

A control unit 102 electrically connected to actuators acting on the wiper 110 is arranged to control said actuators to perform at least one operation chosen among the rotation, translation and pivoting movements of the wiper 110, and the adjustment of the length of the wiper 110.

As illustrated in **FIG. 2****,** the wiper 110 comprises a wiper arm 112 and a wiper blade 114 connected thereto, the wiper 110 being disposed near the windshield 10. The wiper system 100 includes a movable support assembly 120 that supports the wiper 110, and a guide rail 101 for guiding the support assembly 120 along a predefined trajectory. In this embodiment, the predefined trajectory corresponds to a translation between a point P1 that is vertically aligned with a left lateral edge 11a of the windshield 10 and a point P2 that is vertically aligned with a right lateral edge 11b. In one embodiment of the present invention, a linear actuator (not shown) may be used to produce the translation movement of the support assembly 120 along the guide rail 101. In another embodiment of the present invention, the guide rail 101 may advantageously include a plurality of permanent magnets and the support assembly 120 may include a plurality of perforations and at least one electromagnetic coil that surrounds the plurality of perforations. The at least one electromagnetic coil is adapted to interact with the permanent magnets to generate a magnetic induction-based electrodynamic force that leads to a linear motion of the support assembly 120 along the guide rail 101. The control unit 102 may regulate the electric current flowing through the electromagnetic coil to adjust the position of the support assembly 120 along the guide rail 101.

In the position shown in **FIG. 2****,** the wiper 110 is substantially aligned with the center of the guide rail 101, at equal distance from the points P1 and P2. The wiper 110 is in a stowed state, corresponding to a non-operational state of the wiper 110. In this stowed state, the wiper blade 114 is substantially aligned with a transverse direction T and is distant of the windshield 10.

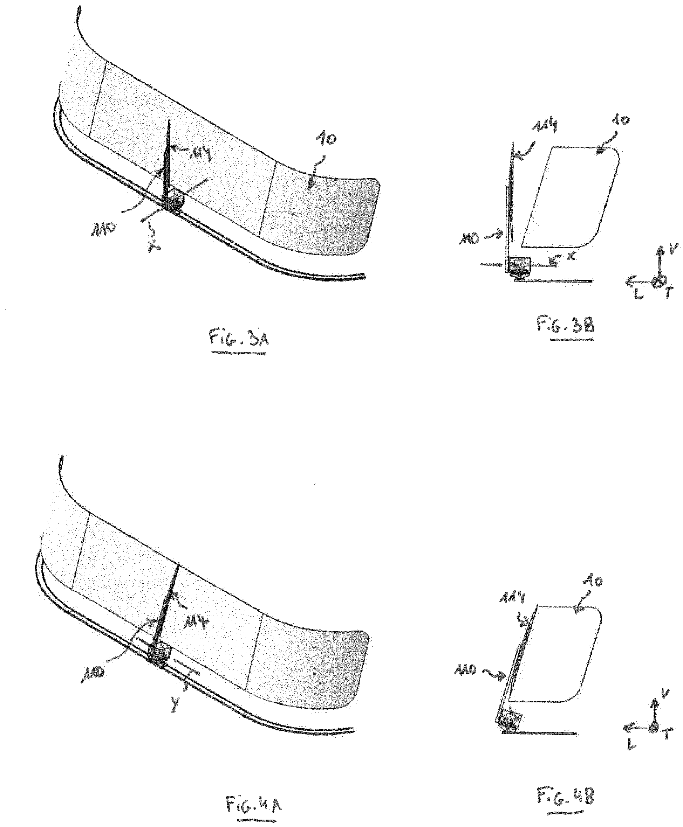

In the position shown in **FIGS. 3A** and **3B****,** the wiper 110 has been moved in an upright position. During the movement between its stowed position to its upright position, the wiper 110 rotates around a rotation axis X that is parallel to a longitudinal direction L. Thus, in this upright position, the wiper blade 114 is substantially aligned with a vertical direction V and is distant of the windshield 10.

In the position shown in **FIGS. 4A** and **4B****,** the wiper 110 has been moved in a tilted position, corresponding to an operational state of the wiper 110. During the movement between its upright position to its tilted position, the wiper 110 pivots around a pivot axis Y that is parallel to a transverse direction T. Thus, in this tilted position, the wiper blade 114 is inclined relative to the vertical and is in contact with the windshield 10.

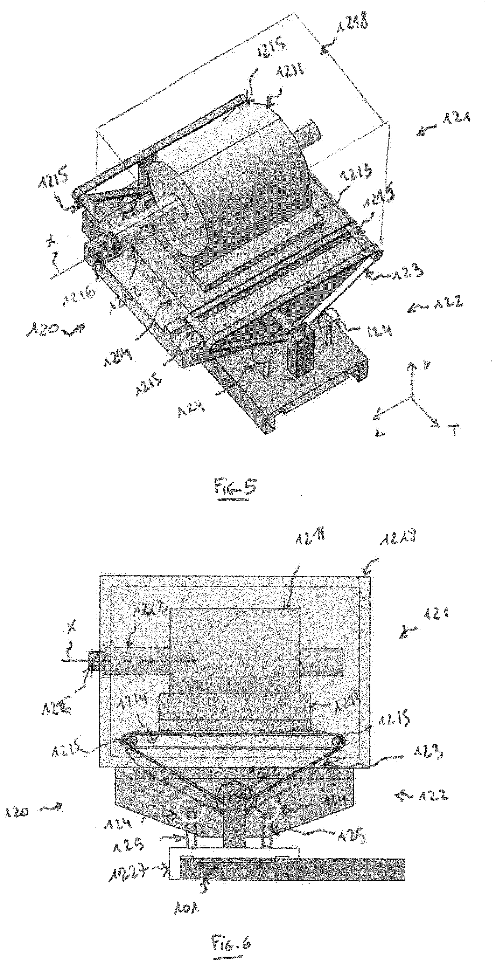

**FIGS. 5** and **6** illustrate a support assembly 120 for a wiper system 100 according to an exemplary embodiment of the invention. This support assembly 120 includes an upper part 121 and a lower part 122. The upper part 121 comprises a motor housing 1218 that encloses a first motor 1211 mounted on a motor base 1213. The motor base 1213 is adapted to slide along a longitudinal direction L through a conveyor 1214. The first motor 1211 is configured to rotate a spindle 1212 around a rotation axis X that is parallel to the longitudinal direction L.

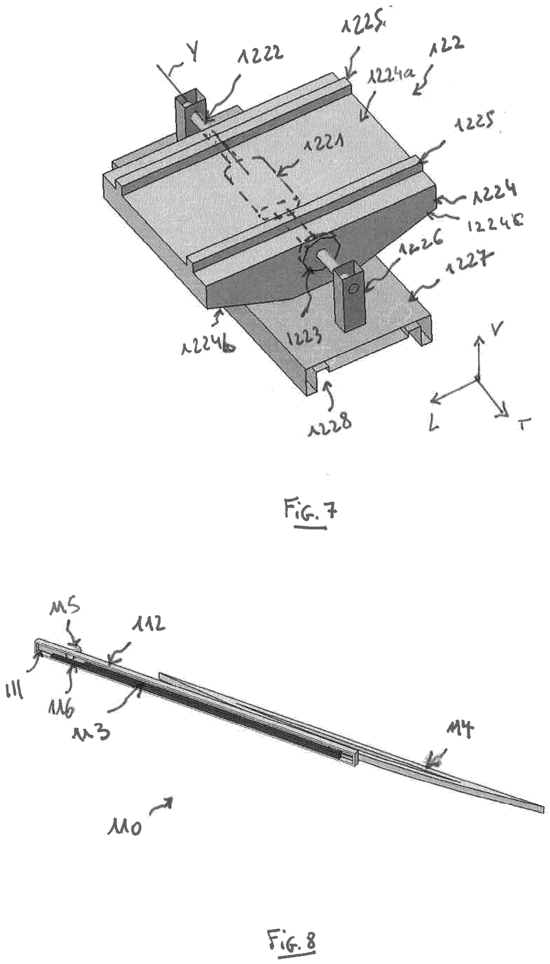

As illustrated in **FIG. 7****,** the lower part 122 comprises a table 1224 having a prism shape defined by a substantially planar upper face 1224a and two inclined lower faces 1224b and 1224c. Two ribs 1225 project from the upper face 1224a and allows a sliding connection of the conveyor 1214 along the table 1224. The table 1224 houses a second motor 1221 that is configured to pivot a shaft 1222 around a pivot axis Y, which is parallel to a transverse direction T, in both clockwise and counterclockwise directions. Each end of the shaft 1222 is rotatably connected to a bearing element 1226 that is fixedly connected to a rectangular base support 1227. The base support 1227 is provided with a bottom groove 1228 having, as illustrated in **FIG. 6****,** a shape complementary to the guide rail 101, thus allowing a sliding connection between the base support 1227 and the guide rail 101. The shaft 1222 supports at least one connecting element 1223 forming a right prism whose base is a multi-sided polygon. This connecting element 1223 cooperates with a corresponding aperture of the table 1224 having a complementary shape to tilt the table 1224 relative to the horizontal when the shaft 1222 pivots around the pivot axis Y. This tilting motion of the table 1224 permits to move the wiper 110 from its non-operating position to its tilted position, and vice versa.

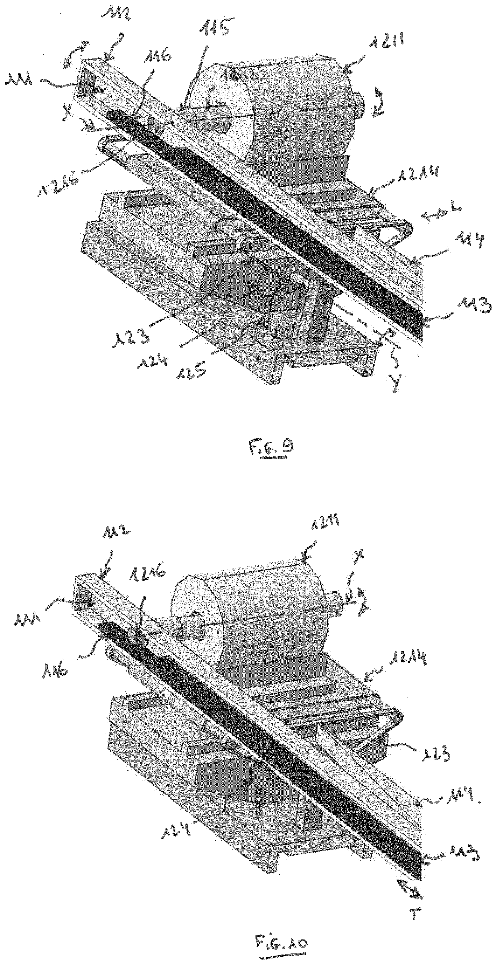

As illustrated in **FIGS. 5** and **6**, the lower part 122 further comprises two belts 123 forming a loop, each belt 123 being wound around two rods protruding from one longitudinal side of the conveyor 1214 and extending in a transverse direction parallel to each other. Each belt 123 is also wound around the shaft 1222. The belts 123 are, in a non-engaged state (shown in solid lines in **FIG. 6**), not in contact with the shaft 1222, and are, in an engaged state (shown in dotted lines in **FIG. 6** and in solid lines in **FIG. 5**), in engagement with the shaft 1222. Thus, in their engaged state, the belts 123 may be driven under the action of the shaft 1222 rotating around the pivot axis Y in such a way that they move along a closed rectilinear trajectory between the shaft 1222 and the two rods 1215. As detailed in the following paragraphs, this translation movement of the belts 123 causes the conveyor 1214 to move along the ribs 1225 of the table 1224 in the longitudinal direction L, thus displacing a spindle connector 1216 provided at one end of the spindle 1212 from a first connecting position, shown in **FIG. 9****,** to a second connecting position, shown in **FIG. 10****.** In the exemplary embodiment of **FIGS. 5** and **6**, the belts 123 may be transferred from their non-engaged state to their engaged state under the action of rollers 124 that may be actuated by means of pneumatic or hydraulic piston 125.

**FIG. 8** is a perspective view of a wiper supported by the support assembly of **FIGS. 5** and **6****.** The wiper 110 is partially disassembled so as to view a wiper arm extender 113 received in an internal cavity 111 of the wiper arm 112, the wiper arm extender 113 being connected to the wiper blade 114 at one of its end. The wiper arm extender 113 may advantageously consist in a parallelepiped rod having a width substantially equal to the one of the internal cavity 111 and a length less than that of the internal cavity 111. Thus configured, the wiper arm extender 113 is allowed to slide inside the wiper arm 112 from a retracted position shown in **FIG. 9** to an extended position shown in **FIG. 10****.** Considering that the wiper 110 has an overall length measured between the end of the wiper arm 112 that is distant from the wiper blade 114 and the end of the wiper blade 114 that is distant from the wiper arm 112, it can be stated that this overall length is greater in the extended position of the wiper arm extender 113 than in the retracted position thereof. The wiper 110 may thus cover a greater surface of the windshield 10 when the wiper arm extender 113 is in its extended position. The movement of the wiper arm extender 113 is advantageously controlled by the first motor 1211, as described in the following paragraphs.

As illustrated in **FIG. 8****,** the wiper arm 112 may be provided with a first coupling element 115 adapted to cooperate with the spindle connector 1216 in the first connecting position thereof and the wiper arm extender 113 may be provided with a second coupling element 116 adapted to cooperate with the spindle connector 1216 in the second connecting position thereof.

As illustrated in **FIG. 9****,** the first coupling element 115 may comprise a tubular branch of the wiper arm 112, said tubular branch being provided with a central opening, which is aligned with the spindle connector 1216 and which opens into the internal cavity 111. In a first exemplary embodiment, the tubular branch 115 may be provided with a toothed gear on its inner periphery, said toothed gear being adapted to interact with a toothed profile provided on the outer periphery of spindle connector 1216 in the first position thereof. Thus assembled, the first motor 1211 is adapted to produce a rotation movement of the wiper blade 114, connected to the wiper arm 112, around the rotation axis X. In a second exemplary embodiment, the tubular branch 115 may comprise threads on its inner periphery, said threads being adapted to interact with a threaded outer profile of the spindle connector 1216 in the first position thereof.

As illustrated in **FIG. 9****,** the conveyor 1214 may move along a longitudinal direction L when the belts 123 are their engaged state under the action of the rollers 124 and when the shaft 1222 rotates around the pivot axis Y. The conveyor 1214 may thus reach the position illustrated in **FIG. 10****,** corresponding to the second connecting position of the spindle connector 1216. In this second connecting position, the spindle connector 1216 extends at least partially inside the internal cavity 111 of the wiper arm 112 and is adapted to interact with a second coupling element 116 provided at the end of the wiper arm extender 113. In an exemplary embodiment, this second coupling element 116 may comprise a toothed outer profile provided on an upper face of the wiper arm extender 113, said toothed outer profile being adapted to interact with a toothed outer profile of the spindle connector 1216. Thus assembled, the first motor 1211 is adapted to produce a translation movement of the wiper blade 114, connected to the wiper arm 112, along a transverse direction T.

The first and second motors 1211 and 1221 may be electric motors controlled by the control unit 102. In particular, the control unit 102 is adapted to adjust the rotation speed and direction of the first and/or second motors 1211, 1221 depending on the operation to perform. As previously disclosed, this operation may be chosen among a rotation of the wiper arm 112 around the rotation axis X, an adjustment of the overall length of the wiper 110, and a pivoting of the tilting table 1224 around the pivot axis Y.

Sensors may be used to determine specific features and/or parameters taken into account by the control unit 102 to adjust the rotation speed and direction of the first and/or second motors 1211, 1221. In particular, a pressure sensor may be arranged to determine the pressure applied by the wiper blade 114 on the windshield 10 and send a corresponding pressure signal to the control unit 102 and the control unit 102 is adapted to adjust the position of the wiper blade 114 relative to the windshield 10 by means of the first and/or second motors 1211, 1221 in response to the pressure signal received from the pressure sensor. Furthermore, a moisture sensor may be arranged to sense the presence of moisture on the windshield 10 and send a corresponding moisture signal to the control unit 102 and the control unit 102 is adapted to cause a movement of the wiper blade 114 by means of the first and/or second motors 1211, 1221 in response to the moisture signal received from the moisture sensor. In an exemplary embodiment, the moisture sensor is adapted to sense a change in the amount of light refracted at an outer windshield surface due to the presence of moisture.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present. Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wiper system (100) for a vehicle windshield (10), the wiper system (100) comprising:
- a support assembly (120) that is slidably movable along a guide rail (101),
- a wiper (110) rotatably mounted on the support assembly (120), the wiper (110) comprising a wiper arm (112) and a wiper blade (114) connected thereto,
wherein the support assembly (120) comprises :
• a first motor (1211) mounted on a motor base (1213), the motor base (1213) being slidably movable relative to a tilting table (1224) between at least two different positions, i.e. a first position in which the first motor (1211) is arranged for interacting with a first coupling element (115) to rotate the wiper arm (112) around a rotation axis (X), and a second position in which the first motor (1211) is arranged for interacting with a second coupling element (116) to adjust a length of the wiper (110),
• a second motor (1221) adapted to pivot the tilting table (1224) around a pivot axis (Y), the tilting table (1224) being movable between at least two different positions, i.e. a non-operating position in which the wiper arm (112) is substantially vertical, the pressure applied by the wiper blade (114) on the vehicle windshield (10) thus being null, and a tilted position in which the wiper blade (114) is inclined relative to the vertical, the wiper blade (114) thus applying a pressure on the vehicle windshield (10).

2. The wiper system (100) of claim 1, wherein the second motor (1221) is adapted to act on a belt (123) connected to the motor base (1213) to produce a linear movement of the motor base (1213) relative to the tilting table (1224) when the belt (123) is in an engaged state.

3. The wiper system (100) of claim 2, wherein the belt (123) is movable through actuating rollers (124) between a non-engaged state, in which the belt (123) is not in contact with a motor spindle (1222) of the second motor (1221), and the engaged state, in which the belt (123) is in contact with said motor spindle (1222).

4. The wiper system (100) of claim 3, wherein the actuating rollers (124) are pneumatically driven.

5. The wiper system (100) of any of the preceding claims, wherein the guide rail (101) includes a plurality of permanent magnets and the support assembly (120) includes a plurality of perforations and at least one electromagnetic coil that surrounds the plurality of perforations, said at least one electromagnetic coil being adapted to interact with the permanent magnets to generate a magnetic induction-based electrodynamic force that leads to a linear motion of the support assembly (120) along the guide rail (101).

6. The wiper system (100) of any of the preceding claims, further comprising a control unit (102) arranged to control the first motor (1211) and/or the second motor (1221) to perform at least one operation chosen among a rotation of the wiper arm (112), an adjustment of the length of the wiper (110), and a pivoting of the tilting table (1224).

7. The wiper system (100) of claim 6, further comprising a pressure sensor arranged to determine the pressure applied by the wiper blade (114) on the vehicle windshield (10) and send a corresponding pressure signal to the control unit (102).

8. The wiper system (100) of claim 6 or claim 7, wherein the control unit (102) is adapted to adjust the position of the wiper blade (114) relative to the vehicle windshield (10) by means of the first and/or second motors (1211, 1221) in response to the pressure signal received from the pressure sensor.

9. The wiper system (100) of any of claims 6-8, further comprising a moisture sensor adapted to sense the presence of moisture on the vehicle windshield (10) and send a corresponding moisture signal to the control unit (102).

10. The wiper system (100) of claim 9, wherein the moisture sensor is adapted to sense a change in the amount of light refracted at an outer windshield surface due to the presence of moisture.

11. The wiper system (100) of claim 9 or claim 10, wherein the control unit (102) is adapted to cause a movement of the wiper blade (114) by means of the first and/or second motors (1211, 1221) in response to the moisture signal received from the moisture sensor.

12. The wiper system (100) of any of the preceding claims, wherein the first coupling element (115) comprises a toothed gear provided in the wiper arm (112), said toothed gear being adapted to interact with a toothed outer profile (1216) of a motor spindle (1212) of the first motor (1211) in the first position of the motor base (1213).

13. The wiper system (100) of any of claims 1-11, wherein the first coupling element (115) comprises threads provided in the wiper arm (112), said threads being adapted to interact with a threaded outer profile (1216) of a motor spindle (1212) of the first motor (1211) in the first position of the motor base (1213).

14. The wiper system (100) of any of the preceding claims, wherein the second coupling element (116) comprises a toothed outer profile provided on a wiper arm extender (113) connected to the wiper blade (114), said toothed outer profile being adapted to interact with a toothed outer profile (1216) of a motor spindle (1212) of the first motor (1211) in the second position of the motor base (1213).

15. A vehicle (1) comprising a vehicle windshield (10) and a wiper system (100) according to any of the preceding claims.
